(19) Europäisches Patentamt
European Patent Office
Office européen des brevets

(11) **EP 3 701 518 B1**

(12) **EUROPÄISCHE PATENTSCHRIFT**

(45) Veröffentlichungstag und Bekanntmachung des Hinweises auf die Patenterteilung:
**04.10.2023 Patentblatt 2023/40**

(21) Anmeldenummer: **18800836.1**

(22) Anmeldetag: **25.10.2018**

(51) Internationale Patentklassifikation (IPC):
**G10D 9/035** *(2020.01)* **G10D 7/02** *(2020.01)*
**G10D 7/06** *(2020.01)*

(52) Gemeinsame Patentklassifikation (CPC):
**G10D 9/035;** G10D 7/02; G10D 7/06

(86) Internationale Anmeldenummer:
**PCT/AT2018/060258**

(87) Internationale Veröffentlichungsnummer:
**WO 2019/079837 (02.05.2019 Gazette 2019/18)**

(54) **ROHRBLATT**

REED

ANCHE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.10.2017 AT 509012017**

(43) Veröffentlichungstag der Anmeldung:
**02.09.2020 Patentblatt 2020/36**

(73) Patentinhaber: **Kückmeier, Nick**
**8063 Eggersdorf bei Graz (AT)**

(72) Erfinder: **Kückmeier, Nick**
**8063 Eggersdorf bei Graz (AT)**

(74) Vertreter: **Schwarz & Partner Patentanwälte GmbH**
**Patentanwälte**
**Wipplingerstraße 30**
**1010 Wien (AT)**

(56) Entgegenhaltungen:
WO-A1-2017/051751 JP-A- 2008 197 450
JP-A- 2017 134 156 US-A- 2 919 617

**Beschreibung**

Die vorliegende Erfindung betrifft ein Rohrblatt für ein Blasinstrument. Außerdem betrifft die Erfindung ein Mundstück für ein Blasinstrument, umfassend ein solches Rohrblatt. Darüber hinaus betrifft die Erfindung ein Blasinstrument, umfassend ein Rohrblatt. Schließlich betrifft die Erfindung die Verwendung von Polyamiden für Rohrblätter für Blasinstrumente.

Hintergrund der Erfindung

In der Gruppe der Rohrblattinstrumente kommen sogenannte Rohrblätter zur Tonerzeugung zum Einsatz. Das Rohrblatt bildet dabei den schwingenden Teil des Mundstücks des Blasinstruments. In der Regel bestehen Rohrblätter aus Holz, Pfahlrohr oder Schilfrohr (auch Riesengras oder *arundo donax* genannt), in selteneren Fällen aus anderen Naturstoffen oder Kunststoffen.

Man unterscheidet zwischen dem einfachen Rohrblatt (Einfachrohrblatt, oder nur "Blatt"), welches eine aufschlagende Zunge ist, und dem doppelten Rohrblatt (Doppelrohrblatt, "Rohr"), welches eine Gegenschlagzunge ist.

Die Klarinette ist ein wichtiger Vertreter der Rohrblattinstrumente. Bei der Klarinette bilden das Rohrblatt und das Mundstück, auf dem es befestigt ist, den Schwingungserzeuger. Neben den Klarinetten haben auch Saxophone ein einfaches Rohrblatt. Doppelte Rohrblätter kommen z.B. bei Oboe und Fagott zum Einsatz.

Rohrblätter sind Verbrauchsartikel, die aufwändig vorbereitet werden müssen und nur für eine begrenzte Zeit nutzbar sind. Außerdem kann sich der Zustand von Rohrblättern rasch verändern, was sich unmittelbar auf den Klang des Instruments auswirkt. Rohrblätter können sich beim Spielen und bei Temperaturänderungen verändern und sie unterliegen einem Alterungsprozess, der dazu führt, dass das Rohrblatt "weicher" wird, Risse bekommt oder aufwellt, bis es unbenutzbar wird.

Rohrblätter aus Schilfrohr müssen nach der Ernte zur Aushärtung zumindest zwei Jahre gelagert werden. Anschließend werden daraus rechteckige flache Stücke entsprechend den Dimensionen und Größen der einzelnen Instrumente geschnitten und in die passende Form geschliffen.

Für Klarinetten z.B. wird das Stück an der Unterseite maschinell völlig eben gehobelt und geschliffen. An der Oberseite wird es zu einem Ende hin auf 0,08 mm abgeflacht, wobei die Toleranzen mit ca. 1/1000 mm extrem gering sind. Das Rohrblatt muss eine gewisse Festigkeit aufweisen, elastisch sein und symmetrische Schwingungseigenschaften aufweisen. Allerdings unterliegen Naturprodukte Schwankungen aufgrund von Wachstums- und Umwelteinflüssen, sodass dennoch Unterschiede zwischen einzelnen Rohrblättern vorliegen können. Außerdem müssen neue Rohrblätter je nach Instrument und Benutzer des Instruments eingespielt werden, was oft mit hohem Aufwand und Einschränkungen in der Verwendungsdauer verbunden ist. Teilweise werden Rohrblätter in Klimakisten gelagert, um die Rohrblätter in einer konstanten Umgebung aus Luftfeuchtigkeit und / oder Temperatur zu halten.

Im Bestreben, die mit natürlich gewachsenen Rohrblättern auftretenden Probleme zu verringern, wurden Versuche unternommen, Kunststoffe als Ausgangsmaterial für Rohrblätter zu verwenden. Kunststoffe sollten ein immer gleichbleibendes Ansprechverhalten aufweisen und weniger rasch altern. Zahlreiche Untersuchungen z.B. mit Polymethylmethacrylat (PMMA) als Ausgangsmaterial scheiterten, da PMMA schlechte Schwingungseigenschaften aufweist. Um die Schwingungseigenschaften zu verbessern, wurden Verbundstoffe z.B. aus Kohlefasern mit Kunstharzen (Kohlefaserverstärkte Kunststoffe) untersucht (Fiberreed und Vibracell). Während die Verarbeitbarkeit dieser Verbundstoffe gut ist, empfinden professionelle Musiker daraus hergestellte Rohrblätter als zu steif im Schwingungsverhalten. Außerdem ist die Lebensmittelechtheit dieser Materialien unklar, da kohlefaserverstärkte Kunststoffe teilweise als bedenklich angesehen werden.

Als Alternative zu PMMA wurde auch schon Polypropylen als Werkstoff für Rohrblätter z.B. von Légère Reeds Ltd. Canada, eingesetzt. Allerdings ist Polypropylen aufgrund seiner hohen Oberflächenspannung nur mit Diamantwerkzeugen bearbeitbar und es ist wasserresistent, was einen scharfen, hellen Klang vor allem im *forte* zur Folge hat. Die Aufnahme von gemahlenem Bambusmehl als Füllstoff im Polyproplyen (FORESTONE JAPAN Co., Ltd.) hat die Klangeigenschaft des Materials nicht wesentlich verbessert. Professionelle Musiker sind daher von Kunststoffrohrblättern abgekehrt.

DE 89 04 968 U1 beschreibt Rohrblätter aus eigenverstärkten oder fremdverstärkten (z.B. durch Fasern) Kunststoffen. Insbesondere eigenverstärkte Kunststoffe, die beispielsweise durch Verstreckung der Polymere erzielbar sind, sollen die Material- und Klangeigenschaften verbessert werden.

US 2 919 617 beschreibt die Herstellung eines Rohrblatts für Blasinstrumente durch Anordnen einer Vielzahl von natürlichen oder synthetischen Fasern in Längsrichtung des zu formenden Körpers, wobei anschließend die Fasern mit einer Kunststoffverbindung, vorzugsweise einer Kunstharzverbindung, imprägniert und zu einem einheitlichen Ganzen gebunden werden.

Beschreibung der Erfindung

Für den spezifischen Klang und die Spieleigenschaften bei Einfachrohrinstrumenten (wie Klarinette oder Saxophon) und bei Doppelrohrinstrumenten sind der Wuchs des Rohrholzes, die Fasern (Xyleme), die individuelle spezifische Geometrie, ausgewogene Schwingungseigenschaften, die Härte und Elastizität, sowie der Feuchtigkeitshaushalt der Blattzunge sehr entscheidend. Der Stand der Technik hat dieses Problem bislang allerdings noch nicht lösen können

Aufgabe der vorliegenden Erfindung ist daher die Bereitstellung eines Rohrblatts, welches Klangeigenschaften wie Schilfrohr bei konstanter Klangqualität aufweist.

Gelöst wird diese Aufgabe durch ein Rohrblatt, umfassend ein Polyamid aus der Gruppe PA *a*, PA *b.c* oder PA *d*-T oder eine Mischung (Blend) davon, wobei

$$a \geq 10,\ b \geq 6,\ c \geq 10,\ d \geq 9.$$

In der für Polyamide üblichen Nomenklatur, werden Polyamide in AB-Polymere und AA/BB-Polymere unterteilt. Die AB-Polymere umfassen solche mit der Grundstruktur

$$-[NH-(CH_2)_x-CO]_n-.$$

Wenn nun x = 5 ist, spricht man von PA 6, da die sich wiederholende Einheit 6 Kohlenstoffatome aufweist. Wenn x = 9, spricht man von PA 10 und wenn x = 11 spricht man von PA 12. In der obigen Schreibweise handelt es sich bei a = 10 um PA 10.

Die AA/BB-Polymere umfassen solche mit der Grundstruktur

$$-[NH-(CH_2)_x-NH-CO-(CH_2)_y-CO]_n-.$$

Wenn nun x = 6 und y = 8 ist, spricht man von PA 6.10, da die sich wiederholende erste Einheit 6 Kohlenstoffatome und die sich wiederholende zweite Einheit 10 Kohlenstoffatome aufweist.

Für die Die AA/BB-Polymere gibt es auch solche, wo die -$(CH_2)_y$- Einheit durch Terephthalat (T) ausgetauscht ist. Bei PA 9-T handelt es sich also um -$(CH_2)_9$- mit anschließender Terephthalat.

Beispiele für die oben genannten Polyamide sind:
PA 6.12, PA 6.10, PA 6.11, PA 10, PA 12, PA 11, PA 9-T, PA 10.10, PA 11, PA 12.12.

Besonders geeignete Polyamide sind PA 6.12, PA 6.10, PA 6.11, PA 10 oder PA 12, insbesondere PA 6.12, PA 6.10 und PA 6.11.

Es hat sich nun in einer Untersuchung verschiedener Materialien überraschenderweise herausgestellt, dass nur spezielle Polyamide die gewünschten Klangeigenschaften aufweisen, welche jenen von Schilfrohrblättern entsprechen. Derartige Rohrblätter eignen sich vor allem auch für professionelle Musiker.

Bevorzugt ist der Gehalt an Polyamiden zumindest 25 Gew. %, besonders bevorzugt zumindest 50 Gew. %, am meisten bevorzugt zumindest 60 Gew.% beträgt. In einer Ausführungsvariante besteht das Rohrblatt aus Polyamid der oben genannten Art.

Besonders bevorzugt ist vorgesehen, dass das Rohrblatt eine Wasseraufnahme von 0,1% bis 2%, vorzugsweise 0,7 bis 0,8%, gemäß ISO 62:1999 aufweist. Polyamide weisen je nach Polymeraufbau unterschiedliche Eigenschaften hinsichtlich der Wasseraufnahme auf. Die herkömmlichen Polyamide PA 6, PA 6.4 und PA 6.6 können z.B. bis zu 8% Wasser aufnehmen, was dazu führt, dass Rohrblätter aus PA 6, PA 6.4 oder PA 6.6 bei längeren Spieldauern den Klang verändern und nicht geeignet sind.

Geeignete Polyamide sind beispielsweise PA 6.12, PA 6.10, PA 6.11, PA 10 oder PA 12, da diese Polyamide die Eigenschaft aufweisen, max. 1% Gewichtsänderung durch Feuchtigkeitsaufnahme zuzulassen.

Weiters kann vorgesehen sein, dass das Rohrblatt Additive aufweist. Diese dienen insbesondere der mechanischen Verstärkung (Verstärkungsmaterial) des Rohrblatts. Beispielsweise können Glasfasern zugesetzt werden. Der maximale Anteil an Additiven beträgt 40 Gew. % bezogen auf das gesamte Rohrblatt. Für einen ausgewogenen Klang bei sehr guter Festigkeit haben sich 22 bis 40 Gew. % als optimal erwiesen. Die Additive können auch der Regulierung des Feuchtigkeitshaushalts dienen. Bevorzugt handelt es sich bei den Additiven um Glasfasern. Die im Spritzguss verwendeten Glasfasern sind zwischen 0,1 und 5 mm lang und im Granulat für den Spritzguss vorhanden. Solche Glasfasern in einem Gehalt bis zu 40 Gew.%, vorzugsweise 22 bis 40 Gew-%, sind besonders geeignet.

In einem bevorzugten Ausführungsbeispiel besteht das Rohrblatt aus einem Polyamid der vorgenannten Art und Glasfasern, wobei der Anteil an Glasfasern bis zu 40 Gew.% beträgt, wobei der Rest Polyamid ist. Besonders bevorzugt ist der Anteil an Glasfasern zwischen 22 und 40 Gew.%, wobei der Rest Polyamid ist. Bevorzugt ist das Polyamid aus der Gruppe PA 6.12, PA 6.10, PA 6.11, PA 10, PA 12, PA 11, PA 9-T, PA 10.10, PA 11, PA 12.12, besonders bevorzugt aus der Gruppe PA 6.12, PA 6.10, PA 6.11, und Blends davon ausgewählt.

Im Rahmen der Erfindung wird unter Rohrblatt sowohl ein einfaches Rohrblatt als auch ein doppeltes Rohrblatt verstanden.

Einfaches Rohrblatt bedeutet, dass nicht das ganze Rohr, sondern nur ein abgeflachtes Stück vom Rohr verwendet wird, welches auf einem passenden Mundstück befestigt wird. Beim Hineinblasen werden Schwingungen erzeugt. Im Gegensatz dazu haben die Oboen und Fagotte doppelte Rohrblätter. Bei Doppelrohrblättern wird das gesamte Stück Rohr genommen, in Längsrichtung eingeschnitten und dann zusammengepresst. Die beiden Enden werden dann abgeflacht, ganz ähnlich wie beim Klarinettenblatt, nur auf beiden Seiten. Es entsteht also das Gegenstück zum Klarinettenblatt mit Mundstück. Dieses Doppelrohrblatt ist der komplette Tonerzeuger, während das Instrument nur noch der Resonanzkörper ist. Das Bearbeiten der Doppelrohrblätter ist wesentlich aufwändiger als das der einfachen Rohrblätter, und eine industrielle Fertigung ist daher wesentlich teurer.

Die vorliegende Erfindung betrifft neben dem zuvor beschriebenen Rohrblatt für ein Blasinstrument damit auch ein Mundstück für ein Blasinstrument, umfassend ein solches Rohrblatt.

Außerdem betrifft die Erfindung ein Blasinstrument, umfassend ein solches Rohrblatt bzw. ein Mundstück mit einem solchen Rohrblatt.

Schließlich betrifft die Erfindung die Verwendung von Polyamiden für Rohrblätter für Blasinstrumente. Bevorzugt weisen die Polyamide eine Feuchtigkeitsaufnahme nach ISO 66 von 0,1 bis 2 Gew.%, vorzugsweise 0,7 bis 0,8 Gew.% auf.

Die Herstellung der Rohrblätter kann z.B. mittels Spritzguss erfolgen, indem Pellets von Polyamid, gegebenenfalls mit Additiven in einem Extruder plastifiziert und anschließend in eine Form eingespritzt werden, wobei die Form im Wesentlichen dem Rohrblatt entspricht. Gegebenenfalls erfolgt anschließend ein Schleifen zum fertigen Rohrblatt. Als Alternative dazu kann die Herstellung über Folienextrusion erfolgen, bei der Pellets von Polyamid, gegebenenfalls mit Additiven, in einem Extruder plastifiziert und anschließend über eine Flachdüse ausgetragen werden, sodass eine Folie bzw. Platte entsteht. Aus der Folie oder Platte werden anschließend Rohlinge ausgeschnitten und anschließend zum fertigen Rohrblatt geschliffen.

Im Unterschied zu anderen Kunststoffen können die erfindungsgemäßen Kunststoffe mit der Hand nachbearbeitet werden. Sie sind schleifbar und schabbar, was bei handelsüblichen Rohrblättern aus Kunststoff bisher nicht möglich war. Dies ist von Vorteil, wenn der Musiker die Rohblätter für seine Bedürfnisse maßschneidern möchte. Insbesondere bei den Rohrblättern aus Polypropylen mit (FORESTONE JAPAN Co., Ltd.) und ohne (Légère Reeds Ltd, Canada) gemahlenem Bambusmehl als Füllstoff ist eine solche Nachbearbeitung praktisch unmöglich.

Kunststoffe, die erfolgreich untersucht wurden, umfassen PA 6.12, PA 6.10, PA 6.11, PA 10 oder PA 12 jeweils mit und ohne Glasfaserzusatz.

Fig. 1a und 1b     zeigen Wasseraufnahmedaten von Rohrblättern aus PA 6.6.

Fig. 2a und 2b     zeigen Wasseraufnahmedaten von Rohrblättern aus PA 6.12.

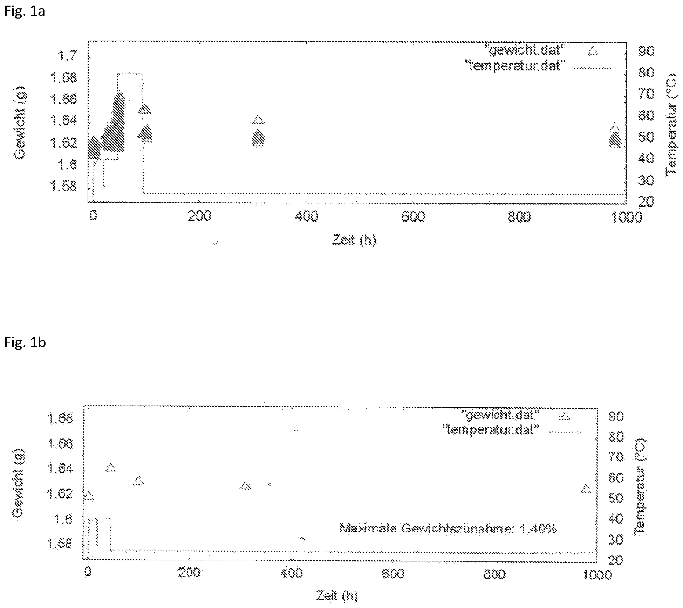

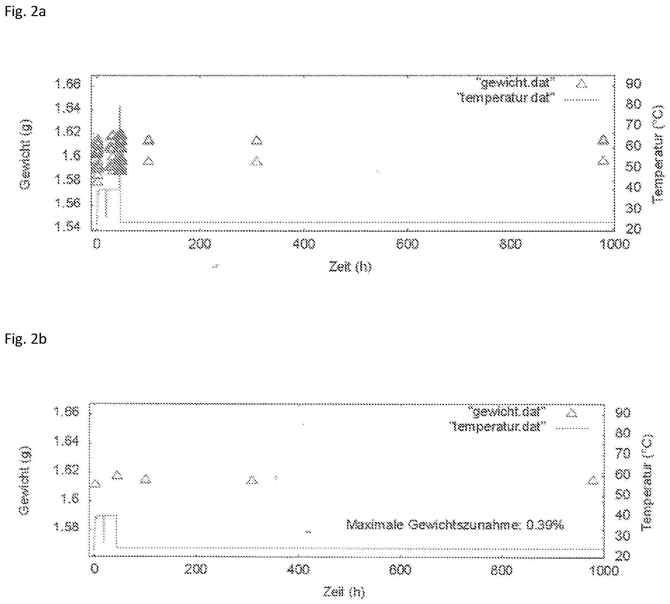

In den Fig. 1a bis 2b ist die Wasseraufnahme von Rohrblättern aus Polyamiden gezeigt. Fig. 1a und 1b zeigen Rohrblätter aus PA 6.6 mit Glasfaserzusatz, Fig. 2a und 2b zeigen Rohrblätter aus PA 6.12 mit Glasfasern. Im jeweils oberen Diagramm (Fig. 1a bzw. 2a) ist die Konditionierung bei 80 °C gezeigt, wobei erkennbar ist, dass der aufgenommene Wasseranteil bereits nach kurzer Zeit konstant bleibt.

Im jeweils unteren Diagramm (Fig. 1b bzw. 2b) ist die Wasseraufnahme bei 40 °C Konditionierung gezeigt, welche ungefähr der Umgebung des Rohrblättchens im Mund des Musikers entspricht. Auch hier erfolgt kurzfristig eine höhere Wasseraufnahme, die letztendlich aber konstant bleibt.

Im Fall von PA 6.6 mit Glasfaserzusatz betrug die maximale Wasseraufnahme bei 80°C bis zu 2,82 Gew.%. Bei PA 6.12 mit Glasfaserzusatz hingegen betrug die Wasseraufnahme bei 80°C maximal 0,70 Gew.%.

Der Musiker kann somit diese Produkte gleich dem Holzblatt schleifen und bearbeiten und sobald er es in den Mund nimmt und damit spielt, nehmen sie gleich dem Holzblatt einen gewissen Feuchtigkeitsanteil auf, der nach kurzem Einspielen konstant bleibt. Ebenso kann dieser Zustand durch Konditionierung vorsimuliert werden. Eine geringe Feuchtigkeitsaufnahme ist für eine hohe Klangqualität entscheidend, da es das Material im Schwingen elastisch macht und dem gewohnten Verhalten eines Holzblattes am nächsten kommt.

Bei PA 6.12 beträgt die Gewichtszunahme zwischen 0,05 und 0,70 Gew.%. Diese Material ist daher stabiler und schafft gleichbleibendere Verhältnisse im Vergleich zu PA 6.6. Nicht gezeigt sind die Daten von PA 6.10, PA 6.11, PA 10 oder PA 12, die zu PA 6.12 vergleichbar sind.

**Patentansprüche**

**1.** Rohrblatt für ein Blasinstrument, **dadurch gekennzeichnet, dass** das Rohrblatt ein Polyamid aus der Gruppe

PA *a,* PA *b.c* oder PA *d*-T umfasst,
oder eine Mischung davon,
wobei *a*≥10, *b* ≥6, *c*≥10, *d*≥9.

**2.** Rohrblatt nach Anspruch 1, **dadurch gekennzeichnet, dass** das Rohrblatt eine Wasseraufnahme von 0,1 Gew.% bis 2 Gew.%, vorzugsweise 0,7 Gew.% bis 0,8 Gew.% gemäß ISO 62 aufweist.

**3.** Rohrblatt nach Anspruch 1 oder Anspruch 2, **dadurch gekennzeichnet, dass** das Polyamid ausgewählt ist aus der Gruppe PA 6.12, PA 6.10, PA 6.11, PA 10, PA 12, PA 11, PA 9-T, PA 10.10, PA 11, PA 12.12.

**4.** Rohrblatt nach Anspruch 3, **dadurch gekennzeichnet, dass** das Polyamid ausgewählt ist aus der Gruppe PA 6.12, PA 6.10, PA 6.11.

**5.** Rohrblatt nach einem der Ansprüche 1 bis 4, **gekennzeichnet durch** Additive.

**6.** Rohrblatt nach Anspruch 5, **gekennzeichnet durch** 22 bis 40 Gew. % Additive.

**7.** Rohrblatt nach Anspruch 5 oder Anspruch 6, **dadurch gekennzeichnet, dass** das Additiv Glasfasern umfasst.

**8.** Rohrblatt nach einem der Ansprüche 1 bis 7, **dadurch gekennzeichnet, dass** das Rohrblatt nur aus dem Polyamid und Glasfasern besteht.

**9.** Rohrblatt nach Anspruch 8, **dadurch gekennzeichnet, dass** der Anteil an Glasfasern bis zu 40 Gew.% beträgt, wobei der Rest Polyamid ist.

**10.** Rohrblatt nach Anspruch 8, **dadurch gekennzeichnet, dass** der Anteil an Glasfasern zwischen 22 und 40 Gew.% beträgt, wobei der Rest Polyamid ist.

**11.** Rohrblatt nach einem der Ansprüche 1 bis 10, **dadurch gekennzeichnet, dass** es ein einfaches Rohrblatt oder ein doppeltes Rohrblatt ist.

**12.** Mundstück für ein Blasinstrument, umfassend ein Rohrblatt nach einem der Ansprüche 1 bis 11.

**13.** Blasinstrument, umfassend ein Rohrblatt nach einem der Ansprüche 1 bis 11 oder ein Mundstück nach Anspruch 12.

**14.** Verwendung von Polyamiden wie in Anspruch 1 definiert zur Herstellung von Rohrblättern für Blasinstrumente.

**Claims**

**1.** A reed for a wind instrument, **characterized in that** the reed comprises a polyamide of the group PA *a,* PA *b.c* or PA *d*-T or a mixture thereof, wherein

$$a \geq 10, b \geq 6, c \geq 10, d \geq 9.$$

**2.** A reed according to claim 1, **characterized in that** the reed shows a water absorption of 0.1% w/w to 2% w/2, preferably 0.7% w/w to 0.8% w/w, according to ISO 62.

**3.** A reed according to claim 1 or claim 2, **characterized in that** the polyamide is selected from the group of PA 6.12, PA 6.10, PA 6.11, PA 10, PA 12, PA 11, PA 9-T, PA 10.10, PA11, PA 12.12.

**4.** A reed according to claim 3, **characterized in that** the polyamide is selected from the group of PA 6.12, PA 6.10, PA 6.11.

**5.** A reed according to any of the claims 1 to 4, **characterized by** additives.

**6.** A reed according to claim 5, **characterized by** 22 to 40% w/w of additives.

**7.** A reed according to claim 5 or claims 6, **characterized in that** the additive comprises glass fibres.

**8.** A reed according to any of the claims 1 to 7, **characterized in that** the reed is composed only of the polyamide and glass fibres.

**9.** A reed according to claim 8, **characterized in that** the portion of glass fibres is up to 40% w/w, with the balance being polyamide.

**10.** A reed according to claim 8, **characterized in that** the portion of glass fibres is between 22 and 40% w/w, with the balance being polyamide.

**11.** A reed according to any of the claims 1 to 10, **characterized in that** it is a single reed or a double reed.

**12.** A mouth-piece for a wind instrument, comprising a reed according to any of the claims 1 to 11.

**13.** A wind instrument, comprising a reed according to any of the claims 1 to 11 or a mouth-piece according to claim 12.

**14.** Use of polyamides as defined in claim 1 for the production of reeds for wind instruments.

**Revendications**

**1.** Anche pour instrument à vent, **caractérisée en ce que** l'anche comprend un polyamide du groupe PA *a,* PA *b.c* ou PA d T,

ou un mélange de ceux-ci,
où

$$a \geq 10,\, b \geq 6,\, c \geq 10,\, d \geq 9.$$

**2.** Anche selon la revendication 1, **caractérisée en ce que** l'anche présente une une absorption d'eau de 0,1 % en poids à 2 % en poids, de préférence de 0,7 % en poids à 0,8 % en poids selon la norme ISO 62.

**3.** Anche selon la revendication 1 ou la revendication 2, **caractérisée en ce que** le polyamide est choisi dans le groupe des PA 6.12, PA 6.10, PA 6.11, PA 10, PA 12, PA 11, PA 9-T, PA 10.10, PA 11, PA 12.12.

**4.** Anche selon la revendication 3, **caractérisée en ce que** le polyamide est choisi dans le groupe des PA 6.12, PA 6.10, PA 6.11.

**5.** Anche selon une des revendications 1 à 4, **caractérisée par** des additifs.

**6.** Anche selon la revendication 5, **caractérisée par** 22 à 40 % en poids d'additifs.

**7.** Anche selon la revendication 5 ou la revendication 6, **caractérisée en ce que** l'additif comprend des des fibres de verre.

**8.** Anche selon une des revendications 1 à 7, **caractérisée en ce que** l'anche n'est composée que de polyamide et de fibres de verre.

**9.** Anche selon la revendication 8, **caractérisée en ce que** la part de fibres de verre représente jusqu'à 40 % en poids, le reste étant du polyamide.

**10.** Anche selon la revendication 8, **caractérisée en ce que** la part de fibres de verre représente entre 22 et 40 % en poids, le reste étant du polyamide.

**11.** Anche selon une des revendications 1 à 10, **caractérisée en ce qu'**elle est une anche simple ou une anche double.

**12.** Bec pour instrument à vent, comprenant une anche selon une des revendications 1 à 11.

**13.** Instrument à vent, comprenant une anche selon une des revendications 1 à 11 ou un bec selon la revendication 12.

**14.** Utilisation de polyamides comme défini en revendication 1 pour la fabrication d'anches pour instruments à vent.

Fig. 1a

Fig. 1b

Fig. 2a

Fig. 2b

**IN DER BESCHREIBUNG AUFGEFÜHRTE DOKUMENTE**

**In der Beschreibung aufgeführte Patentdokumente**

- DE 8904968 U1
- US 2919617 A